(19) Europäisches Patentamt
European Patent Office
Office européen des brevets

(11) Numéro de publication : **0 196 979**
**B1**

# (12) FASCICULE DE BREVET EUROPÉEN

(45) Date de publication du fascicule du brevet : **20.09.89**

(51) Int. Cl.$^4$ : **H 04 L 25/49**, H 04 L 25/36

(21) Numéro de dépôt : **86400707.5**

(22) Date de dépôt : **02.04.86**

**(54) Procédé et dispositif d'insertion d'un signal numérique sur une voie à débit plus élevé.**

(30) Priorité : **04.04.85 FR 8505155**

(43) Date de publication de la demande : **08.10.86 Bulletin 86/41**

(45) Mention de la délivrance du brevet : **20.09.89 Bulletin 89/38**

(84) Etats contractants désignés : **DE GB IT NL**

(56) Documents cités :
**US-A- 3 622 983**
**US-A- 4 215 245**
**"ICC'79 CONFERENCE RECORD OF THE INTERNATIONAL CONFERENCE ON COMMUNICATIONS", Boston, MA, vol. 4, 10-14 juin 1979, IEEE, New York, US; Y. TAKASAKI et al.: "Optical pulse formats for long wavelength fiber optic digital transmission"**

(73) Titulaire : **SAT Société Anonyme de Télécommunications**
**41, rue Cantagrel**
**F-75631 Paris Cedex 13 (FR)**

(72) Inventeur : **Guerillot, Yves Marie Noel**
**36 rue de Picpus**
**F-75012 Paris (FR)**

(74) Mandataire : **Bloch, Robert et al**
**2, square de l'Avenue du Bois**
**F-75116 Paris (FR)**

**EP 0 196 979 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne la transmission numérique d'informations codées et plus particulièrement le transcodage de ces informations en vue de leur insertion sur un canal numérique à débit plus élevé. Un tel procédé est décrit par exemple dans le brevet US-A-3 622 983.

L'invention s'applique en particulier à la transmission bilatérale d'informations numériques au débit de 704 Kbit/s sur une artère hertzienne offrant des accès au débit de 2048 Kbit/s, par simple remplacement des cartes jonctions des équipements terminaux.

Pour réaliser une telle insertion, l'homme de l'art penserait tout naturellement à insérer des bits supplémentaires sur la trame numérique, à utiliser une méthode de justification ou toute autre méthode bien décrite dans la technique. De telles méthodes nécessitent toutefois une synchronisation, par exemple grâce à un mot de verrouillage de trame.

La présente invention vise à réaliser une insertion sans utiliser de synchronisation particulière. L'invention consiste essentiellement à transcoder les informations du signal de données de façon bien spécifique.

Le système de l'invention s'applique aux données transmises aussi bien par câbles que par faisceaux hertziens, par fibres optiques ou par tout autre support pourvu qu'il s'agisse de jonctions codirectionnelles.

Le système de l'invention évite l'utilisation d'embrouilleur-désembrouilleur au niveau 704 Kbit/s ce qui évite la multiplication d'erreurs de transmission. En effet, la fonction essentielle de tels embrouilleurs-desembrouilleurs est d'augmenter la richesse en transitions sur le canal de données. Et le transcodage de l'invention est tel qu'il augmente précisément la richesse en transitions quel que soit le contenu du message à transmettre.

La complexité du dispositif de transcodage de l'invention est extrêmement réduite grâce au système de l'invention. Le système de l'invention procure de grands avantages tels que la fourniture d'alarmes en cas d'absence de signal HDB3 à l'entrée de la jonction ou en cas d'absence du signal binaire à 2048 Kbit/s en sortie du démultiplexeur de trame.

A cet effet, l'invention a pour objet un procédé d'insertion d'un signal numérique à débit donné sur une voie à débit plus élevé, dans lequel on transforme ledit signal numérique en un signal binaire associé à un signal d'horloge, procédé caractérisé par le fait qu'on transcode ce signal binaire au débit le plus bas en un signal binaire au débit le plus élevé, ledit transcodage se traduisant par dans chaque séquence de n bits, n étant un entier naturel, une substitution de chaque bit par un paquet de bit d'un des types suivants : doublet et triplet, chaque triplet étant formé de la répétition du bit à transmettre pour les deux premiers et de son inverse pour le troisième, chaque doublet étant formé de la répétition simple du bit à transmettre, la séquence ainsi transcodée étant alors formée de p bits avec p entier naturel, supérieur à n.

Selon une application préférée de l'invention, la voie à débit élevé présente un débit binaire de 2048 Kbit/s et le signal binaire un débit de 704 Kbit/s, chaque séquence à bas débit étant formée de 11 bits et étant transcodée en une séquence de 32 bits de telle sorte que les dix premiers bits sont remplacés par dix triplets et le onzième bit est remplacé par un doublet.

Le dispositif de transcodage mettant en oeuvre le procédé de l'invention comporte à l'émission des moyens pour récupérer le signal d'horloge $H_0$ à partir du signal bipolaire, des moyens pour ranger les séquences de n éléments binaires dans une mémoire, des moyens pour extraire lesdits bits sous forme de séquences de p éléments binaires au rythme H' d'une base de temps synchronisé par $H_0$ signal d'horloge à bas débit, ledit rythme H' étant déduit du rythme $H_0$ par une boucle d'asservissement de phase, des moyens pour transcoder chaque bit de la séquence à n éléments binaires en triplet ou doublet et former une séquence à p éléments binaires.

En réception, le dispositif de l'invention comporte des moyens pour reconnaître chaque séquence de p éléments binaires et synchroniser l'horloge $H_0$ à bas débit, des moyens pour sélectionner un bit dans chaque triplet et un bit dans chaque doublet, des moyens pour inscrire dans une mémoire les bits sélectionnés, des moyens pour reformer le signal bipolaire à faible débit par lecture de la mémoire au rythme de l'horloge $H_0$ à bas débit.

Selon une réalisation préférée de l'invention, les moyens pour reconnaître chaque séquence à p éléments binaires en réception comprennent des moyens pour reconnaître un doublet et les trois bits suivant un doublet.

Avantageusement, les moyens pour reconnaître un doublet et les trois bits suivant un doublet comprennent des moyens pour comparer l'identité des bits des doublets, l'identité des bits du triplet suivant le couplet, après inversion du dernier bit du triplet.

Avantageusement, les moyens pour reconnaître chaque séquence comprennent cinq bascules montées en cascade fournissant cinq signaux à l'entrée d'un circuit de comparaison qui compare simultanément cinq bits successifs et détermine s'il s'agit d'un doublet suivi d'un triplet.

Selon une autre caractéristique de l'invention, les moyens pour sélectionner un bit par triplet et un bit par doublet comprennent des moyens pour sélectionner le second bit du triplet lorsqu'il y a identité entre les deux premiers, ou l'inverse du troisième bit du triplet lorsqu'il n'y a pas identité entre les deux premiers.

Les moyens pour sélectionner un bit par doublet comprennent des moyens pour choisir le second bit de chaque doublet.

De plus, ces moyens pour sélectionner un bit par triplet et un bit par doublet comprennent trois bascules montées en cascade, les deux dernières fournissant une information à l'entrée d'un détecteur d'erreurs, les deux premières fournissant une information à l'entrée d'un sélecteur, ledit sélecteur étant piloté par la sortie dudit détecteur d'erreurs, la sortie dudit sélecteur fournissant l'information sélectionnée.

L'invention procure de grands avantages tels que la détection d'erreurs et même la correction d'erreurs.

D'autres avantages et caractéristiques apparaîtront à la lecture de la description suivante illustrée par des dessins.

La figure 1 représente un schéma général du système émission-réception de transcodage des informations selon l'invention.

La figure 2 représente un chronogramme des signaux disponibles en sortie des blocs émission.

La figure 3 illustre le circuit de détection de séquence de la figure 1.

La figure 4 représente un chronogramme explicitant la récupération de synchronisation.

La figure 5 représente le circuit de décodage de la figure 1.

La figure 6 représente un chronogramme des signaux obtenus en réception, réalisant le transcodage de 2048 Kbit/s en 704 Kbit/s.

En se référant à la figure 1, le signal HDB3, par exemple, est mis en forme par un circuit 1 bien connu de l'homme de métier qui fournit deux signaux $HDB^+$ et $HDB^-$ correspondant aux polarités positive et négative du signal bipolaire HDB3 à l'entrée d'un circuit 2. Ce circuit 2 reçoit le signal d'horloge à 704 Khz issu du récupérateur d'horloge 3. Ce circuit 3 récupère le signal d'horloge avec la phase exacte du signal de données entrant à 704 Kbit/s en se connectant aux bornes de sortie du circuit 1. Le circuit 2 transforme donc le signal bipolaire en signal binaire. Ce signal binaire D 704 est mis dans une mémoire 5 par groupes de 11 bits au rythme d'un signal $H_o$, ici le signal H 704 à 704 Khz, représenté sur le chronogramme de la figure 2, fourni par la base de temps 6. Ces 11 bits sont extraits de la mémoire 5 au rythme du signal d'horloge CK. Ce signal d'horloge CK est une horloge 704 Khz en moyenne mais synchrone du signal d'horloge H 2048 à 2048 Khz fournie par la base de temps 6, déduite de la fréquence 704 Khz par une boucle d'asservissement de phase par exemple. Les données extraites de la mémoire 5 au rythme du signal CK sont traitées par un circuit 7 qui est un circuit de codage selon l'invention. Ce circuit de codage 7 permet de remplacer chaque bit extrait de la mémoire 5 par un triplet pour ce qui concerne les dix premiers bits extraits de la mémoire 5, par un doublet pour ce qui concerne le onzième bit. De plus, chaque triplet est tel que les deux premiers bits du triplet sont dans l'état du bit à transmettre, le troisième bit est dans l'état opposé. Le doublet, par contre, est formé de deux bits dans l'état du bit à transmettre.

En se reportant au chronogramme, le signal IV est le signal de commande d'inversion du troisième bit du triplet tandis que le signal DC est le signal de données à 2048 Khz issu du circuit 7 de codage de l'invention. Une séquence n par exemple est ainsi formée de 32 bits de 10 triplets et un doublet. Ce signal DC est appliqué à l'entrée d'un circuit 8 d'insertion des alarmes qui le remplace par un signal d'inhibition d'alarme SIA, en cas de manque sur le signal HDB3 entrant, détecté par exemple par un circuit 4 en sortie du circuit 1.

Ainsi, l'augmentation de débit se fait dans le rapport 32/11 ce qui correspond au débit normalisé de 2048 Kbit/s en sortie du circuit 8.

De la même façon, le système de l'invention prévoit la récupération du signal HDB3 au débit de 704 Kbit/s à partir de la voie à 2048 Kbit/s. A cet effet, le signal de données à 2048 Kbit/s ($D_{2048}$) est appliqué, d'une part, à l'entrée d'un circuit 12 de décodage, d'autre part, à l'entrée d'un circuit 10 de détection de séquence.

La figure 3 illustre le circuit 10 de détection de séquence. Ce circuit d'identification des séquences est basé sur le principe de la reconnaissance d'un doublet et du triplet suivant ce doublet. En effet, si l'on peut contrôler cinq bits successifs et en particulier reconnaître un doublet, on est sûr d'avoir reconnu une séquence. Ainsi, soit la configuration suivante :

$$\ldots (x, x, \overline{x}) \; (a, b) \; (c, d, e) \; (y, y, \overline{y}) \ldots$$

il suffit, pour décoder avec sécurité la séquence à 2048 Khz, de reconnaître cinq bits successifs ; on a reconnu un doublet si $a = b$ et un triplet si $c = d$ et $d \neq e$. Pour réaliser de telles comparaisons, on dispose essentiellement de cinq bascules, comme représenté sur la figure 3, placées en cascade 101, 102, 103, 104, 105. Le signal $D_{2048}$ est appliqué à l'entrée de la bascule 101. La sortie de la bascule 105 est appliquée à l'entrée $A_1$ d'un circuit 106 de comparaison. La sortie de la bascule 104 est appliquée à l'entrée $B_1$ du circuit 106 de comparaison. La sortie de la bascule 103 est reliée à l'entrée $A_2$ du circuit 106 de comparaison. Les entrées $A_3$ et $B_2$ du circuit 106 de comparaison reçoivent le signal sortant de la bascule 102. Le signal sortant de la bascule 101, enfin est appliqué à l'entrée $B_3$ du circuit 106 de comparaison après inversion au moyen d'un circuit 107 inverseur. Ces diverses bascules fonctionnent au rythme d'un signal d'horloge H', ici le signal d'horloge H 2048 associé au signal D 2048.

La figure 4 représente un chronogramme de ces diverses comparaisons. Le signal D2048 de données

est appliqué à l'entrée des bascules 101 à 105 ce qui permet d'effectuer la comparaison ($A_i = B_i$) simultanée des bits a, b, c, d, e, au moyen du circuit 106. Ce circuit 10 de détection des séquences permet une remise en phase de la base de temps 11 en asservissant cette horloge sur le début d'une séquence. Cette base de temps 11 reçoit le signal d'horloge H 2048 et, par division du rythme par 11/32, par exemple au moyen d'une boucle de phase, restitue le rythme initial à 704 Khz.

Les données D2048 sont donc également appliquées à l'entrée d'un circuit 12 de décodage qui fonctionne au rythme 2048 Khz entrant. Ce circuit est illustré sur la figure 5. Il est essentiellement formé de trois bascules 121, 122, 123 placées en cascade, la sortie des deux dernières bascules étant reliée à l'entrée d'un détecteur d'erreurs 124. La sortie de ce détecteur d'erreurs est reliée à l'entrée d'un sélecteur 125 qui reçoit également les signaux sortant des bascules 121 et 122. La sortie du sélecteur 125 fournit le signal corrigé à la mémoire 16. En effet, on convient d'utiliser la redondance pour corriger les erreurs par comparaison des bits contenus dans les triplets et les doublets.

On convient de corriger les erreurs en respectant le critère suivant de correction. Si on appelle 1, 2, 3 les bits formant un triplet, si le bit 1 est égal au bit 2, l'information prise en compte est le bit 2 ; si le bit 1 est différent du bit 2, on convient de corriger le bit à transmettre dans la mémoire 16 et on adopte alors l'inverse du bit 3.

Pour les doublets, il n'est pas possible de définir un critère de choix. Dans ce cas, le deuxième bit du doublet est sélectionné de façon arbitraire.

Le chronogramme de la figure 6 illustre un exemple du choix des bits à prendre en compte à l'écriture dans la mémoire 16.

Le signal CE est un signal d'horloge écriture synchronisé par la reconnaissance du doublet en sortie du circuit 10, dont les fronts descendants définissent l'instant de validation du bit sélectionné. Les signaux QE, QF, QG sont respectivement les signaux issus des trois bascules 121, 122, 123. Le signal Su est le signal corrigé en sortie du sélecteur 125 que l'horloge d'écriture va valider à l'écriture dans la mémoire 16.

Le signal CL est un signal d'horloge lecture fourni par la base de temps 11 permettant de lire cette mémoire 16. C'est une horloge à 704 Khz synchrone de l'horloge à 2048 Khz. Les bits (signal DS) sont donc extraits de la mémoire 16 au rythme de cette horloge CL de lecture pour être appliquée à l'entrée du circuit 17 d'insertion des alarmes. On remarquera le décalage d'environ une demi longueur de mémoire apporté par la base de temps 11 entre l'écriture et la lecture.

Les alarmes sont fournies, soit par un circuit 14 qui détecte l'absence ou un manque du signal d'horloge entrant à 2048 Khz, soit par un circuit 15 qui contrôle le fonctionnement de la reconnaissance de la séquence effectué par le circuit 10. En sortie du circuit 17, le signal binaire à 704 Kbit/s est converti en code HDB3 par exemple ou, de façon plus générale, en code bipolaire au moyen du circuit 18 avant d'être retransmis au moyen de la jonction 19 au débit 704 Kbit/s.

Le système de reconnaissance des séquences réduit la complexité du dispositif de décodage de l'invention.

La réalisation du transcodage selon l'invention, au moyen de mémoire tampons associées à des boucles d'asservissement de phase, assure une fonction de dégigotage sur le train numérique.

La présente invention présente un intérêt tout particulier lorsque la transmission du signal à 2 Mbit/s s'effectue par voie hertzienne, par exemple au moyen d'un codage à 4 états de phase. En effet, une éventuelle erreur au niveau du décodage différentiel propre au support de transmission créé deux erreurs dans le signal à 2 Mbit/s. Le système de correction de l'invention compense en grande partie l'augmentation d'erreurs dûes au codage différentiel grâce au traitement prévu en réception, comme le montre le tableau suivant, dans lequel R représente le rapport entre le taux d'erreurs sur le signal à 704 Kbit/s et le taux d'erreurs sur le signal à 2 Mbits/s.

| | sans correction d'erreur selon l'invention | Avec correction d'erreur selon l'invention | |
|---|---|---|---|
| Mode de transmission 2 Mbit/s | Sans codage ou avec codage différentiel 4φ | Sans codage | Avec codage différentiel 4φ |
| R | 1/1 | 1/11 | 6/11 |

Le nombre d'erreurs $N_E$ de code peut être mesuré en sortie du détecteur d'erreur 124. On peut en déduire le taux d'erreurs $\tau_E$ par la relation :

$$N_E = \tau_E . D . 35/12 \text{ où } D = 704 \text{ Kbit/s}$$

La présente invention s'applique à tout changement de débit dès lors que la fréqence élevée du canal de transmission n'est pas une fréquence multiple de la fréquence basse et ceci afin de retrouver l'exigence du doublet.

On a représenté sur la figure 1 un bloc 13 pour grouper les alarmes émission-réception. Ainsi, le signal d'alarme réception fourni, soit par le circuit 14, soit par le circuit 15, est également transmis au bloc 13. De même, à l'émission, la détection d'un manque de signal par le circuit 4 est également transmise au circuit 13.

## Revendications

1. Procédé d'insertion d'un signal numérique à débit donné sur une voie à débit plus élevé, dans lequel on transforme ledit signal numérique en un signal binaire associé à un signal d'horloge, procédé caractérisé par le fait qu'on transcode ce signal binaire au débit le plus bas en un signal binaire au débit le plus élevé, ledit transcodage se traduisant par, dans chaque séquence de n bits, n étant un entier naturel, une substitution de chaque bit par un paquet de bit d'un des types suivants : doublet et triplet, chaque triplet étant formé de la répétition du bit à transmettre pour les deux premiers et de son inverse pour le troisième, chaque doublet étant formé de la répétition simple du bit à transmettre, la séquence ainsi transcodée étant alors formée de p bits avec p entier naturel supérieur à n.

2. Procédé selon la revendication 1 caractérisé par le fait que la voie à débit élevé présente un débit binaire de 2048 Kbit/s et le signal binaire un débit de 704 Kbit/s, chaque séquence à bas débit étant formée de 11 bits et étant transcodée en une séquence de 32 bits de telle sorte que les dix premiers bits sont remplacés par dix triplets et le onzième bit est remplacé par un doublet.

3. Dispositif d'émission d'un signal bipolaire à débit donné sur une voie à débit plus élevé et de réception, à partir de la dite voie, d'un signal bipolaire audit débit donné, caractérisé par le fait qu'il comporte à l'émission, des moyens pour récupérer le signal d'horloge $H_O$ (H 704) à partir du signal bipolaire, des moyens pour ranger les séquences de n éléments binaires, n étant un entier naturel, dans une mémoire (5), des moyens pour extraire lesdits bits sous forme de séqences de p éléments binaires, p étant un entier naturel, au rythme H' (H 2048), d'une base de temps, synchronisé par $H_o$ (H 704) signal d'horloge à bas débit, ledit rythme H' (H 2048) étant déduit du rythme $H_o$ (H 704) par une boucle d'asservissement de phase, des moyens pour transcoder chaque bit de la séquence à n éléments binaires en triplet ou doublet, et former une séquence à p éléments binaires, et, à la réception, des moyens (10), pour reconnaître chaque séquence de p éléments binaires et synchroniser l'horloge $H_o$ (H 704) à bas débit, des moyens (12) pour sélectionner un bit dans chaque triplet et un bit dans chaque doublet, des moyens pour inscrire dans une mémoire (16) les bits sélectionnés, des moyens pour reformer le signal bipolaire à faible débit par lecture de la mémoire (16) au rythme de l'horloge $H_o$ (H 704) à bas débit.

4. Dispositif selon la revendication 3, caractérisé par le fait que les moyens pour reconnaître chaque séquence à p éléments binaires en réception comprennent des moyens (10) pour reconnaître un doublet et les trois bits suivant un doublet.

5. Dispositif selon la revendication 4, caractérisé par le fait que lesdits moyens (10) pour reconnaître un doublet et les trois bits suivant un doublet comprennent des moyens pour comparer l'identité des bits des doublets, l'identité des bits du triplet suivant le doublet, après inversion du dernier bit du triplet.

6. Dispositif selon la revendication 5, caractérisé par le fait que lesdits moyens (10) pour reconnaître chaque séquence comprennent cinq bascules (101 - 105) montées en cascade fournissant cinq signaux à l'entrée d'un circuit de comparaison (106) qui compare simultanément cinq bits successifs et détermine s'il s'agit d'un doublet suivi d'un triplet.

7. Dispositif selon l'une des revendications 3 à 6, caractérisé par le fait que lesdits moyens (12) pour sélectionner un bit par triplet et un bit par doublet comprennent des moyens pour sélectionner le second bit du triplet lorsqu'il y a identité entre les deux premiers, ou l'inverse du troisième bit du triplet lorsqu'il n'y a pas identité entre les deux premiers.

8. Dispositif selon l'une des revendications 3 à 7, caractérisé par le fait que lesdits moyens (12) pour sélectionner un bit par doublet comprennent des moyens pour choisir le second bit de chaque doublet.

9. Dispositif selon l'une des revendications 7 ou 8 caractérisé par le fait que lesdits moyens (12) pour sélectionner un bit par triplet et un bit par doublet comprennent trois bascules (121, 122, 123) montées en cascade, les deux dernières (122, 123) fournissant une information à l'entrée d'un détecteur d'erreurs (124), les deux premières (121, 122) fournissant une information à l'entrée d'un sélecteur (125), ledit sélecteur (125) étant piloté par la sortie dudit détecteur d'erreurs (124), la sortie dudit sélecteur (125) fournissant l'information sélectionnée.

## Claims

1. A method of inserting a digital signal at a given flow rate in a channel with higher flow rate, in which said digital signal is transformed into a binary signal associated with a clock signal, method characterized in that this binary signal at the lower flow rate is transcribed into a binary signal at the

higher flow rate, said transcribing resulting, in each sequence of n bits, n being a natural integer, in a substitution of each bit by a bit packet of one of the following types : doublet and triplet, each triplet being formed by the repetition of the bit to be transmitted for the first two and the inverse thereof for the third, each doublet being formed by the simple repetition of the bit to be transmitted, the sequence thus transcribed then being formed of p bits, being a natural integer greater than n.

2. The method as claimed in claim 1, characterized in that the high flow rate channel has a binary flow rate of 2048 Kbit/s and the binary signal a flow rate of 704 Kbit/s, each low flow rate sequence being formed of 11 bits and being transcribed into a sequence of 32 bits so that the first ten bits are replaced by ten triplets and the eleventh bit is replaced by a doublet.

3. A device for transmitting a bipolar signal at a given rate over a higher rate channel and for receiving, from said channel, a bipolar signal at said given flow rate, characterized in that it comprises, on the emission side, means for recovering the clock signal $H_0$ (H704) from the bipolar signal, means for storing the sequences of n binary elements, n being a natural integer, in a memory (5), means for reading out said bits in the form of sequences of p binary elements, p being a natural integer, at the timing H' (H2048) of a time base, synchronized by the low flow rate clock signal $H_0$ (H704), said timing H' (H2048) being derived from the timing $H_0$ (H704) by a phase locking loop, means for transcribing each bit of the n binary elements sequence into a triplet or doublet and forming a p binary elements sequence and, on the reception side, means (10) for recognizing each sequence of p binary elements and synchronizing the low flow rate clock $H_0$ (H704) means (12) for selecting a bit from each triplet and a bit from each doublet, means for writing into a memory (16) the selected bits, means for reforming the low flow rate bipolar signal by reading from the memory (16) at the timing of the low rate clock $H_0$ (H704).

4. The device as claimed in claim 3, characterized in that said means for recognizing each p binary elements sequence at reception comprise means (10) for recognizing a doublet and the three bits following a doublet.

5. The device as claimed in claim 4, characterized in that said means (10) for recognizing a doublet and the three bits following a doublet comprise means for comparing the identity of the bits of the doublets, the identity of the bits of the triplet following the doublet, after inversion of the last bit of the triplet.

6. The device as claimed in claim 5, characterized in that said means (10) for recognizing each sequence comprise five flip flops (101-105) connected in cascade and delivering five signals to the input of a comparison circuit (106) which simultaneously compares five successive bits and determines if it is a doublet followed by a triplet.

7. The device as claimed in one of claims 3 to 6, characterized in that said means (12) for selecting a bit from each triplet and a bit from each doublet comprise means for selecting the second bit of the triplet when there is identity between the first two or the inverse of the third bit of the triplet when there is not identity between the first two.

8. The device as claimed in one of claims 3 to 7, characterized in that said means (12) for selecting a bit from each doublet comprise means for selecting the second bit of each doublet.

9. The device as claimed in one of claims 7 or 8, characterized in that said means (12) for selecting a bit from each triplet, and a bit from each doublet comprise three flip flops (121, 122, 123) connected in cascade, the last two (122, 123) delivering information to the input of an error detector (124), the first two (121, 122) delivering information to the input of a selector (125), said selector (125) being driven by the output of said error detector (124), the output of said selector (125) delivering the selected information.

## Patentansprüche

1. Verfahren zum Einfügen eines numerischen Signales gegebener Leistung in einen Kanal höherer Leistung, bei dem man dieses numerische Signal zu einem Binärsignal transformiert, das einem Taktsignal zugeordnet ist, dadurch gekennzeichnet, daß man dieses Binärsignal geringerer Leistung in ein Binärsignal höherer Leistung transcodiert, wobei diese Transcodierung in jeder Sequenz von n Bits mit n als ganzer natürlicher Zahl durch eine Substitution jedes Bits durch ein Bitpaket eines der folgenden Typen erfolgt : Doublett oder Triplett, wobei jedes Triplett gebildet ist durch die Wiederholung des zu übertragenden Bits für die beiden ersten Bestandteile und seinen Reziprokwert für den dritten Bestandteil, während jedes Doublett gebildet ist durch die einfache Wiederholung des zu übertragenden Bits, so daß die auf diese Weise transcodierte Sequenz somit gebildet ist aus p Bits mit p als ganzer natürlicher Zahl größer als n.

2. Verfahren nach Anspruch 1, dadurch gekennzeichnet, daß der Kanal höherer Leistung eine Binärleistung von 2048 Kbit/s und das Binärsignal eine Leistung von 704 Kbit/s aufweisen, wobei jede Sequenz niedriger Leistung gebildet ist aus 11 Bits und transcodiert ist in eine Sequenz von 32 Bits, derart, daß die zehn ersten Bits ersetzt sind durch zehn Tripletts und das elfte Bit ersetzt ist durch ein Doublett.

3. Vorrichtung zum Übertragen eines bipolaren Signals gegebener Leistung auf einem Kanal höherer Leistung und zum Empfang eines bipolaren Signals der gegebenen Leistung anhand dieses Kanals, dadurch gekennzeichnet, daß sie zum Übertragen Einrichtungen um das Taktsiganl $H_0$ (H 704) aus dem

bipolaren Signal wiederzugewinnen, Einrichtungen, um die Sequenzen von n binären Elementen mit n als ganzer natürlicher Zahl in einen Speicher (5) einzuordnen, Einrichtungen, um diese Bits in Form von Sequenzen aus p binären Elementen mit p als ganzer natürlicher Zahl aus einer Zeitbasis im Rhythmus H' (H 2048) auszulesen, der durch das Taktsignal $H_0$ (H 704) geringer Leistung synchronisiert ist, wobei der Rhythmus H' (H 2048) abgeleitet ist vom Rhythmus $H_0$ (H 704) mittels einer Phasensteuerungsschleife Einrichtungen, um jedes Bit der Sequenz von n binären Elementen zu einem Triplett oder Doublett zu transcodieren und eine Sequenz von p binären Elementen zu bilden, und zum Empfang Einrichtungen (10), um jede Sequenz von p binären Elementen wiederzuerkennen und den Takt $H_0$ (H 704) geringer Leistung zu synchronisieren, Einrichtungen (12), um ein Bit in jedem Triplett und ein Bit in jedem Doublett auszuwählen, Einrichtungen, um die ausgewählten Bits in einen Speicher (16) einzugeben, und Einrichtungen enthält, um das bipolare Signal geringer Leistung durch Auslesen des Speichers (16) im Taktrhythmus $H_0$ (H 704) geringer Leistung wieder zurückzubilden.

4. Vorrichtung nach Anspruch 3, dadurch gekennzeichnet, daß die Einrichtungen zum Wiedererkennen jeder Sequenz von p binären Elementen im Empfangsteil Einrichtungen (10) enthält, um ein Doublett un die drei Bits folgendend einem Doublett wiederzuerkennen.

5. Vorrichtung nach Anspruch 4, dadurch gekennzeichnet, daß diese Einrichtungen (10) zum Wiedererkennen eines Doubletts und die drei Bits folgendend einem Doublett Einrichtungen zum Vergleichen der Identität der Bits der Doubletts und der Identität der Bits des Tripletts, welches dem Doublett folgt, nach Inversion des letzten Bits des Tripletts zu vergleichen, umfassen.

6. Vorrichtung nach Anspruch 5, dadurch gekennzeichnet, daß diese Einrichtungen (10) zum Wiedererkennen jeder Sequenz fünf kaskadenförmig angeordnete Kippschaltungen (101-105) umfassen, die füng Signale an den Eingang einer Vergleichsschaltung (106) liefern, die gleichzeitig fünf aufeinanderfolgende Bits vergleicht und bestimmt, ob es sich um ein Doublett gefolgt von einem Triplett handelt.

7. Vorrichtung nach einem der Ansprüche 3 bis 6, dadurch gekennzeichnet, daß diese Einrichtungen (12) zum Auswählen eines Bits je Triplett und eines Bits je Doublett Einrichtungen umfassen um das zweite Bit des Tripletts auszuwählen, wenn Identität zwischen den beiden ersten Bestandteilen besteht, oder den Reziprokwert des dritten Bits des Tripletts, wenn keine Identität zwischen den beiden ersten Bestandteilen besteht.

8. Vorrichtung nach einem der Ansprüche 3 bis 7, dadurch gekennzeichnet, daß die Einrichtungen (12) zum Auswählen eines Bits je Doubletts Einrichtungen umfassen, um das zweite Bit jedes Doubletts auszuwählen.

9. Vorrichtung nach einem der Ansprüche 7 oder 8, dadurch gekennzeichnet, daß diese Einrichtungen (12) zum Auswählen eines Bits je Tripletts und eines Bits je Doublett drei kaskadenförmig angeordnete Kippschaltungen (121, 122, 123) umfassen, von denen die beiden letzteren (122, 123) eine Information an den Eingang eines Fehlerdetaktors (124) liefern, während die beiden ersteren (121, 122) eine Information an den Eingang eines Wählers (125) liefern, der gesteuert ist durch den Ausgang des Fehlerdetektors (124), wobei der Ausgang dieses Wählers (125) die ausgewählte Information liefert.

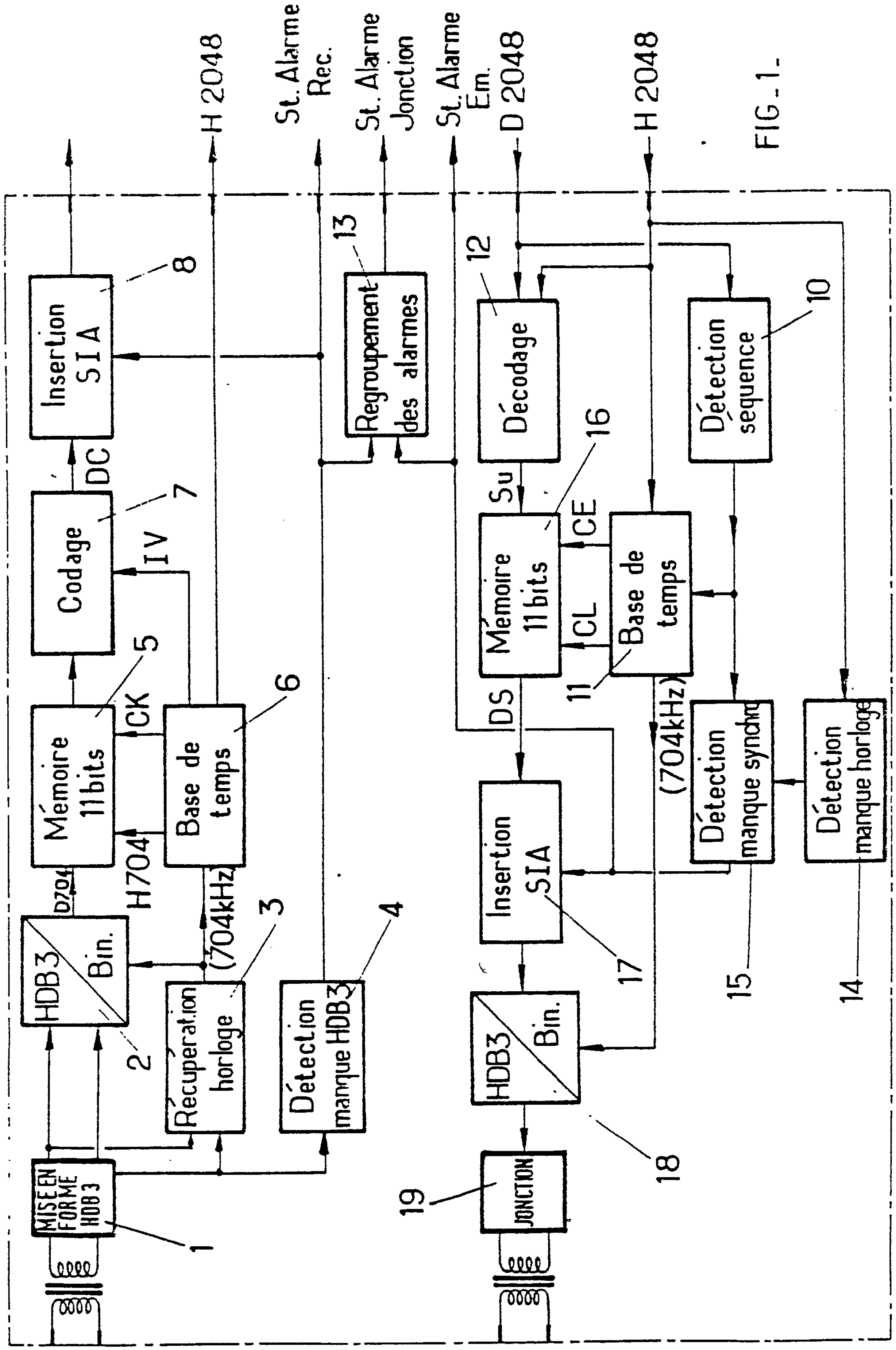
H 2048
St. Alarme Rec.
St. Alarme Jonction
St. Alarme Em.
D 2048
H 2048
Insertion SIA
8
13
Regroupement des alarmes
12
Décodage
10
Détection sequence
DC
7
Codage
IV
Su
16
CE
Mémoire 11bits
CL
Base de temps
5
CK
Mémoire 11bits
6
Base de temps
11
DS
(704kHz)
Détection manque synchro
Détection manque horloge
D704
H704
Insertion SIA
HDB3 Bin.
(704kHz)
3
4
2
Récuperation horloge
Détection manque HDB3
17
15
14
HDB3 Bin.
18
19
JONCTION
MISE EN FORME HDB3
1

FIG_1_

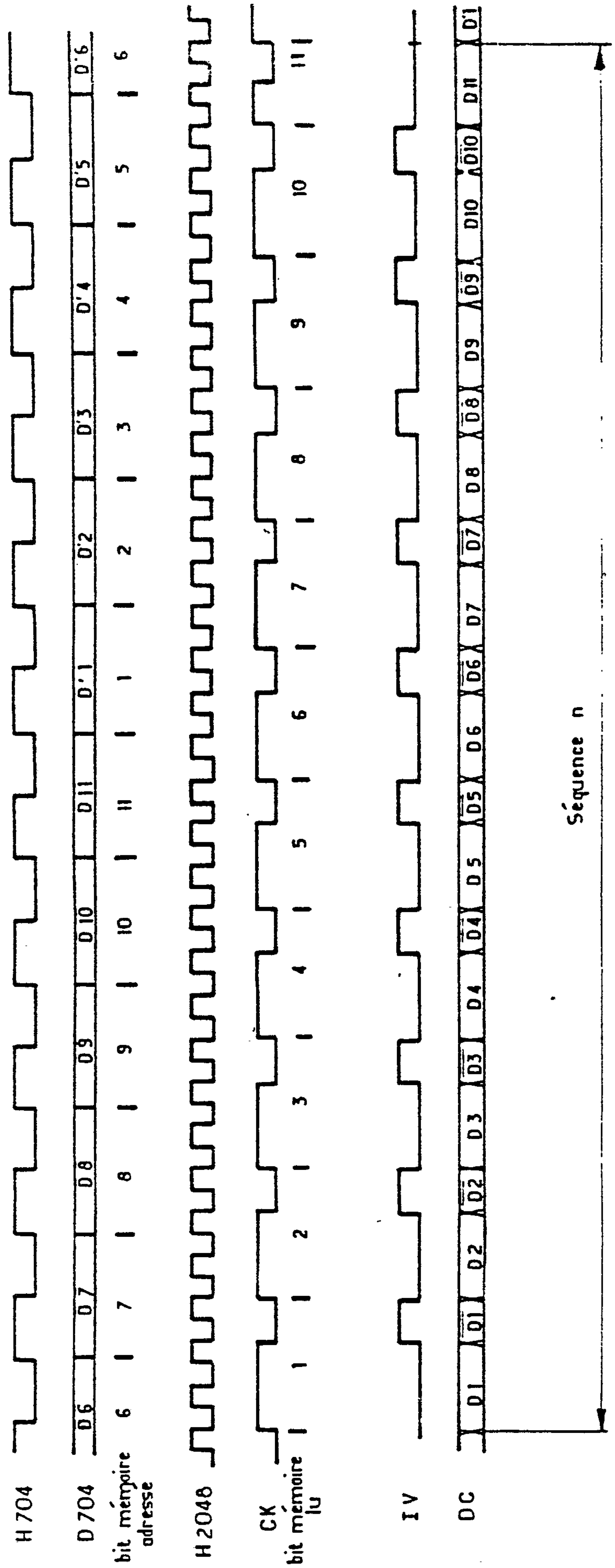
H 704
D 704
bit mémoire adresse
H 2048
CK
bit mémoire lu
I V
DC
Séquence n

FIG. 2

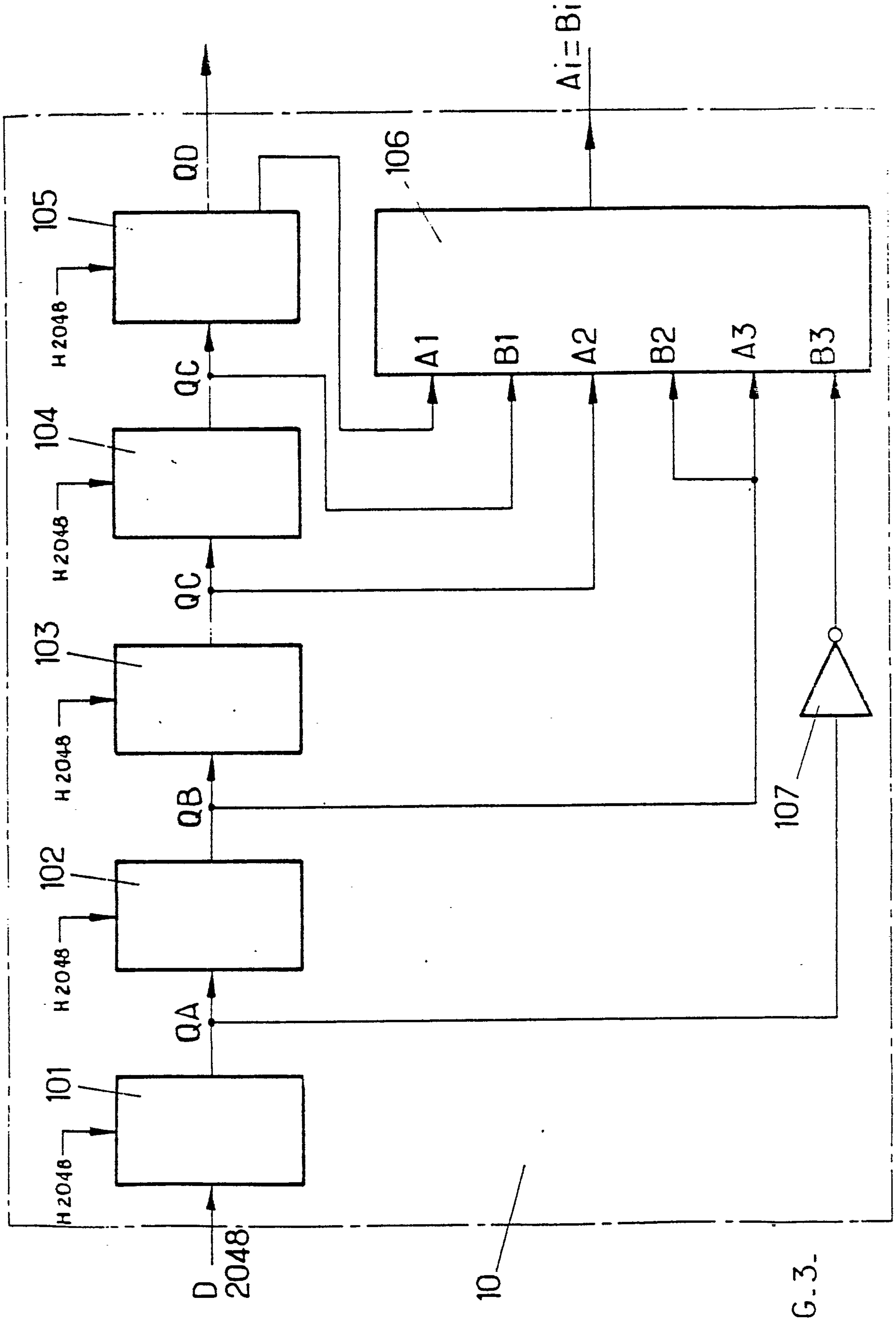
Ai=Bi
QD
105
106
H 2048
QC
A1
B1
A2
B2
A3
B3
104
H 2048
QC
103
H 2048
QB
107
102
H 2048
QA
101
H 2048
D
2048
10

FIG. 3

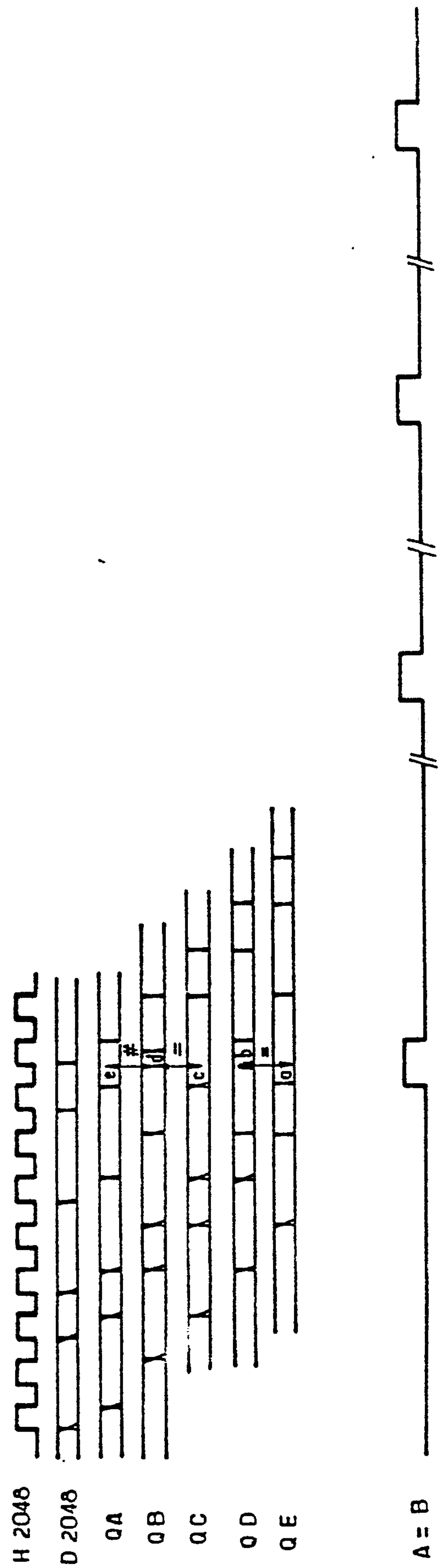


FIG_4_

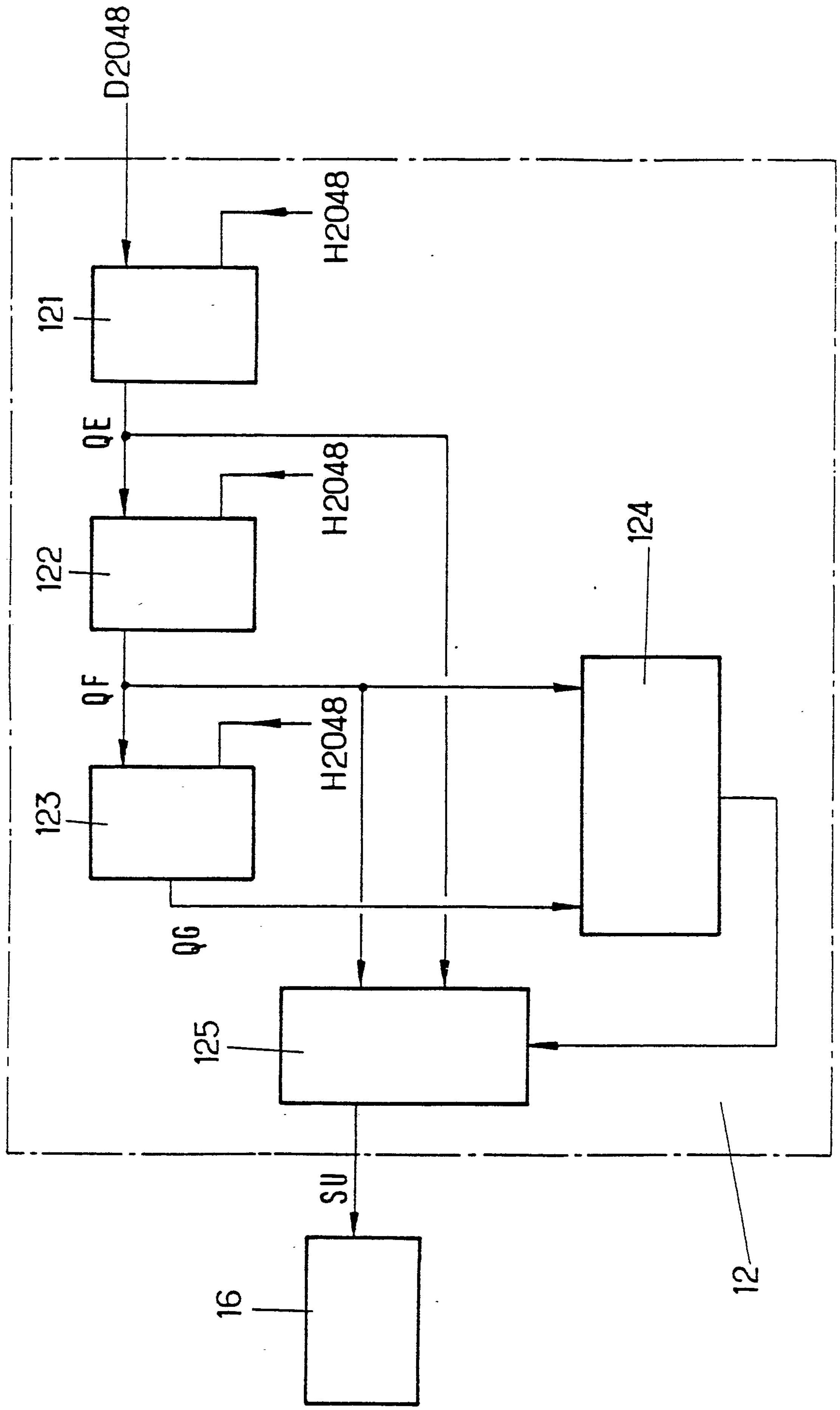


FIG_5_

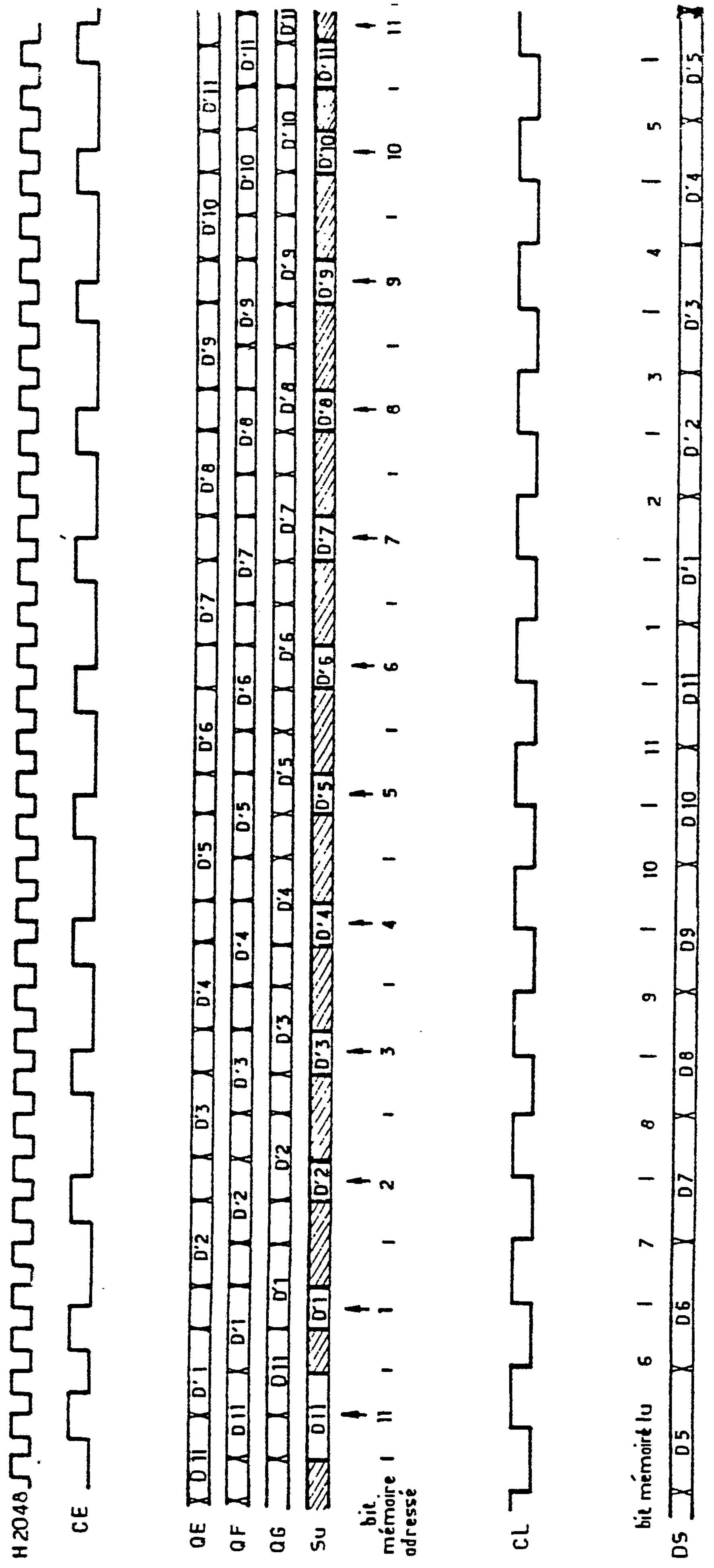


FIG.6.